# EUROPEAN PATENT APPLICATION

(11) **EP 4 481 908 A1**
(43) Date of publication of application: **25.12.2024**
(21) Application number: 24175215.3
(22) Date of filing: 10.05.2024
(51) Int. Cl.: H01M 50/147, H01M 50/176, H01M 50/55, H01M 50/553, H01M 50/559, H01M 50/562, H01M 50/566

(54) **CYLINDRICAL SECONDARY BATTERY**

(30) Priority: 09.06.2023 KR 20230074063
(71) Applicant: Samsung SDI Co., Ltd., Yongin-si, Gyeonggi-do 17084 (KR)
(72) Inventor: JUNG, Hyun Ki, 17084 Yongin-si (KR); PARK, Gun Gue, 17084 Yongin-si (KR); KO, Sung Gwi, 17084 Yongin-si (KR); YU, Gwan Hyeon, 17084 Yongin-si (KR); KIM, Myung Seob, 17084 Yongin-si (KR); YOO, Yoon Sun, 17084 Yongin-si (KR); JUN, Woo Tae, 17084 Yongin-si (KR); LEE, Ho Jae, 17084 Yongin-si (KR); KIM, Mun Sung, 17084 Yongin-si (KR)
(74) Representative: Marks & Clerk LLP

(57) **Abstract**

A cylindrical secondary battery includes an electrode assembly; a cylindrical can accommodating the electrode assembly; and a terminal portion including a rivet terminal coupled to one side in the longitudinal direction of the can and electrically connected to the electrode assembly and at least one insulator between the can and the rivet terminal to insulate the can and the rivet terminal from each other. The battery also includes a rotation preventing portion on the can and/or the terminal portion. Since a structure for preventing rotation of the rivet terminal is provided on the upper surface of the can or the rivet head or the main body to which the rivet terminal is fastened, the rivet terminal may not rotate due to an external force or vibration. Therefore, the stability and reliability of the secondary battery can be improved.

## Description

### BACKGROUND

### 1. Field

Embodiments of the present disclosure relate to a cylindrical secondary battery having an improved terminal structure.

### 2. Description of the Related Art

In general, a cylindrical secondary battery includes a cylindrical electrode assembly, a cylindrical can that accommodates the electrode assembly with an electrolyte, and a cap assembly that seals the can. The cap assembly is electrically connected to the electrode assembly and the exterior of the secondary battery.

In a battery module that uses a plurality of cylindrical secondary batteries by modularizing the same, bus bars are connected to the upper and lower terminals of the secondary batteries, respectively. Therefore, there are problems in that the battery module may have a complicated structure and the manufacturing process time may be extended. To solve these problems, a secondary battery having a structure in which a positive electrode terminal in the form of a rivet is provided on one side of the can facing the cap assembly can be used. When applying a rivet-type terminal, there is a risk that the head or the main body of the rivet may rotate due to an external force or vibration. Therefore, a solution is needed to prevent these problems.

The above information disclosed in this Background section is only for enhancement of understanding of the background of the invention and therefore it may contain information that does not constitute prior art.

### SUMMARY

Embodiments of the present disclosure provide a cylindrical secondary battery having an improved terminal structure.

A secondary battery according to an embodiment of the present disclosure includes: an electrode assembly; a can accommodating the electrode assembly; and a terminal portion including a rivet terminal coupled to one side in the longitudinal direction of the can and electrically connected to the electrode assembly and at least one insulator between the can and the rivet terminal to insulate the can and the rivet terminal from each other. The secondary battery also includes a rotation preventing portion on at least one of the can and the terminal portion. The secondary battery may be a cylindrical secondary battery. The can may be a cylindrical can. However, other shapes are also possible.

The can may include a circular upper surface through which a terminal hole into which the rivet terminal is inserted is formed, and the rivet terminal may include a head disposed on the outside of the upper surface and a main body inserted into the terminal hole and disposed inside the can.

A first rotation preventing portion may be formed on the upper surface.

The first rotation preventing portion may be formed by laser engraving.

The first rotation preventing portion may be a pattern formed of at least one of a dotted line, a straight line, a curve, and a figure.

The rivet terminal may include a second rotation preventing portion formed on the surface of the head facing the upper surface portion.

The second rotation preventing portion may be at least one of a plurality of grooves, a plurality of protrusions, and a plurality of ribs.

The rivet terminal may include a third rotation preventing portion formed on the outer peripheral surface of the main body.

The third rotation preventing portion may be at least one of a plurality of grooves, a plurality of protrusions, and a plurality of ribs.

The first to third rotation preventing portions may be provided as a combination of two or more.

At least one protrusion may be formed to protrude on one of the insulator and the rivet terminal, and an accommodation groove for accommodating the protrusion may be formed on the other one.

In addition, a cylindrical secondary battery according to embodiments of the present disclosure may include: an electrode assembly including a first electrode plate, a second electrode plate, and a separator interposed between the first electrode plate and the second electrode plate; a can having a circular upper surface portion through which a terminal hole is formed, and a side portion extending downward from the upper surface, and accommodating the electrode assembly; and a terminal portion including a rivet terminal inserted into the terminal hole and electrically connected to the first electrode plate, and a plurality of insulators insulating between the rivet terminal and the upper surface portion, wherein a rotation preventing portion may be provided on at least one of the can and the terminal portion.

The rivet terminal may include a head disposed on the outside of the upper surface portion and a main body inserted into the terminal hole and disposed inside the can.

A first rotation preventing portion may be formed on the upper surface portion.

The first rotation preventing portion may be formed by laser engraving.

The first rotation preventing portion may be a pattern formed of at least one of a dotted line, a straight line, a curve, and a figure.

The rivet terminal may include a second rotation preventing portion formed on the surface of the head facing the upper surface portion.

The second rotation preventing portion may be at least one of a plurality of grooves, a plurality of protrusions, and a plurality of ribs.

The rivet terminal may include a third rotation preventing portion formed on the outer peripheral surface of the main body.

The third rotation preventing portion may be at least one of a plurality of grooves, a plurality of protrusions, and a plurality of ribs.

The first to third rotation preventing portions may be provided as a combination of two or more.

At least one protrusion may be formed to protrude on one of the insulator and the rivet terminal, and an accommodation groove for accommodating the protrusion may be formed on the other one.

The cylindrical secondary battery may further include: a first electrode current collector plate inserted between the rivet terminal and the electrode assembly and electrically connected to the first electrode plate; and a second electrode current collector plate disposed adjacent to an end of the side portion and electrically connected to the second electrode plate and the side portion.

The cylindrical secondary battery may further include a cap assembly insulated from the can while being coupled to the side portion.

The side portion may include a beading part that is concavely formed in an upper side of the cap assembly, and a crimping part that is formed by inwardly bending a lower end of the side portion, and the cap assembly may be disposed between the beading part and the crimping part.

The cap assembly may include a cap plate that seals the side portion, and a gasket inserted between the cap plate and the side portion.

The edge of the second electrode current collector plate may be inserted between the beading part and the gasket and may be in contact with the beading part.

At least some of the above and other features of the invention are set out in the claims.

### BRIEF DESCRIPTION OF DRAWINGS

FIG. 1 is a perspective view of a secondary battery according to an embodiment of the present disclosure.
FIG. 2 is a cross-sectional view of the cylindrical secondary battery according to FIG. 1.
FIG. 3 is a partial cross-sectional view showing a terminal structure according to FIG. 2.
FIG. 4 is a partial perspective view showing the terminal structure according to FIG. 2.
FIGS. 5 to 10 are plan views showing an upper surface of a can according to various embodiments of the present disclosure.
FIGS. 11 to 13 are plan views showing a lower surface of a head of a rivet terminal according to various embodiments of the present disclosure.
FIG. 14 is a perspective view showing a main body of a rivet terminal according to an embodiment of the present disclosure.
FIG. 15 is a partial cross-sectional view showing a terminal structure according to another embodiment of the present disclosure.

### DETAILED DESCRIPTION

Examples of the present disclosure are provided to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, as an example, the term "below" can encompass both an orientation of above and below.

Hereinafter, a cylindrical secondary battery according to an embodiment of the present invention will be described in detail with reference to the accompanying drawings.

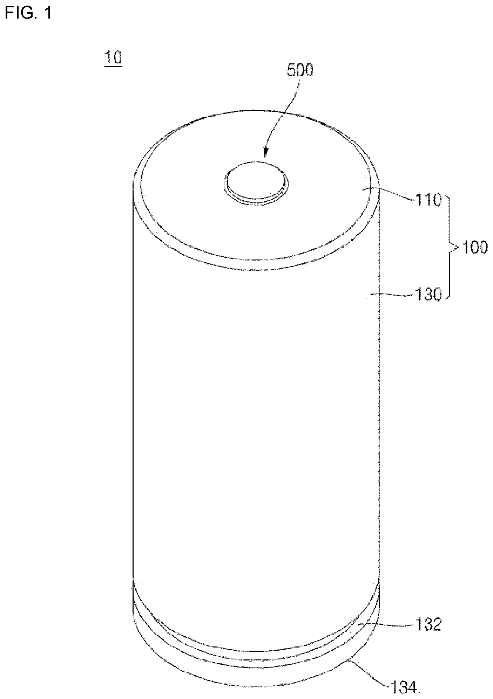

First, the basic structure of a cylindrical secondary battery will be described with reference to FIGS. 1 to 4.

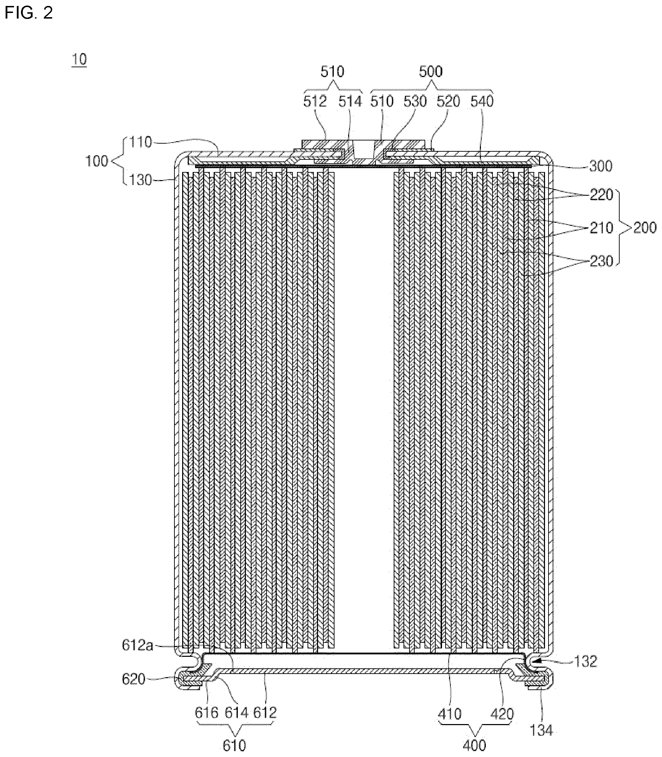

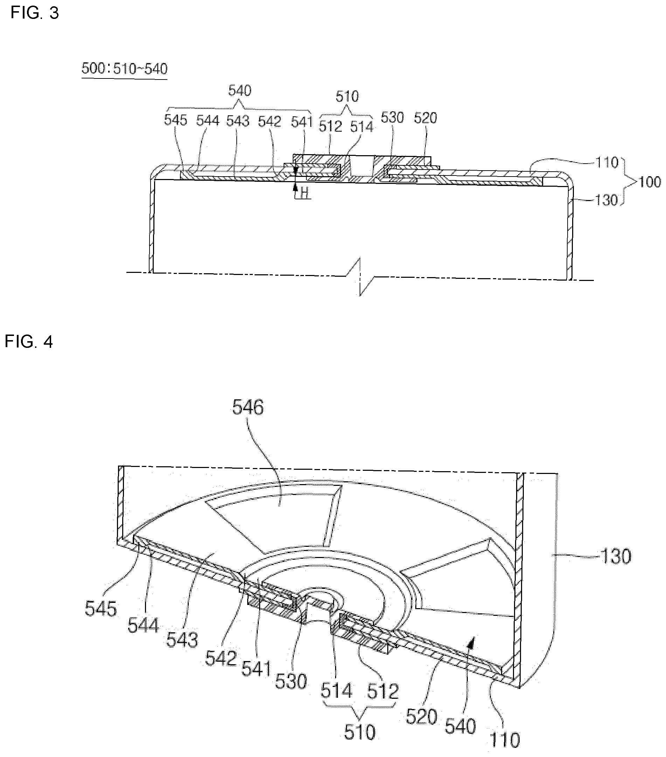

FIG. 1 is a perspective view of a secondary battery according to an embodiment of the present disclosure. FIG. 2 is a cross-sectional view of the cylindrical secondary battery according to FIG. 1. FIG. 3 is a partial cross-sectional view showing a terminal structure according to FIG. 2. FIG. 4 is a partial perspective view showing the terminal structure according to FIG. 2.

As shown in FIGS. 1 and 2, the secondary battery 10 (e.g., cylindrical secondary battery 10) according to an embodiment of the present disclosure may include a can 100 (e.g., a cylindrical can), an electrode assembly 200 accommodated inside the can 100, a first electrode current collector plate 300, a second electrode current collector plate 400, a terminal portion 500 provided on one side of the can 100, and a cap assembly provided on the other side of the can 100.

As shown in FIG. 1, the can 100 may include a circular upper surface portion 110 and a cylindrical side portion 130 extending downward from the upper surface portion 110. Since the lower side of the side portion 130 is open, the can 100 is shaped of a cylinder having an open lower end.

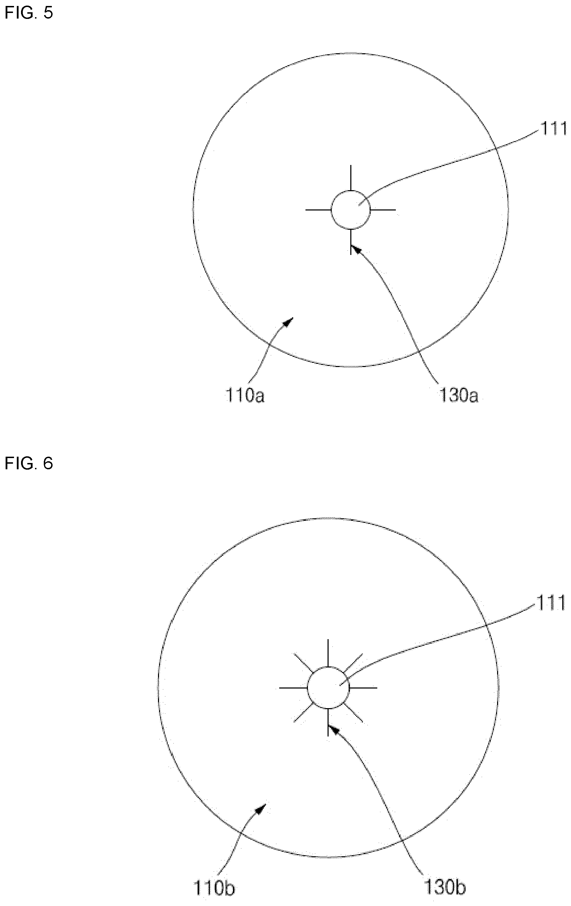

A terminal hole 111 (see FIGS. 5 to 10) may be formed through the center of the upper surface portion 110. A portion of the terminal portion may be exposed to the outside of the secondary battery 10 through the terminal hole 111. A structure to prevent rotation of a rivet terminal to be described later may be provided on the upper surface portion 110.

The upper end of the side portion 130 is connected to the upper surface portion 110. In one or more embodiments, the upper surface portion 110 and the side portion 130 are integrally formed. The lower end of the side portion 130 is open, and the cap assembly is provided at the open end. A beading part 132 may be formed adjacent to the bottom of the side portion 130. The beading part 132 may be inwardly and concavely formed from the side portion 130. The end of the side portion 130, spaced apart from (lower than) the beading part 132, may be bent toward the inside of the can 100 to form a crimping part 134. The beading part 132 is configured to prevent separation of the electrode assembly 200. The cap assembly may be between the beading part 132 and the crimping part 134. The crimping part 134 may seal the can 100 by fixing the cap assembly.

The can 100 having the above-described structure may be made of steel, a steel alloy, aluminum, an aluminum alloy, or equivalents thereof, but the material is not limited thereto. The electrode assembly 200, the first electrode current collector plate 300, and the second electrode current collector plate 400 are accommodated within the can 100 together with an electrolyte.

As shown in FIG. 2, the electrode assembly 200 may be configured such that a first electrode plate 210, a second electrode plate 220, and a separator 230 interposed therebetween are wound into a cylindrical shape. In this embodiment, the first electrode plate 210 may be a positive electrode plate, and the second electrode plate 220 may be a negative electrode plate. However, the opposite is also possible (i.e., the first electrode plate 210 may be a negative electrode plate, and the second electrode plate 220 may be a positive electrode plate).

In the first electrode plate 210, a positive electrode active material layer may be formed by coating, etc. on at least one surface of an aluminum (Al) foil. As an example, the positive electrode active material layer may be a transition metal oxide (e.g., LiCoO2, LiNiO2, LiMn2O4, etc.). A first electrode uncoated portion in which the positive electrode active material layer is not formed may be provided on the first electrode plate 210. A plurality of first electrode substrate tabs may be formed by cutting the first electrode uncoated portion into a certain shape by notching, etc. In this embodiment, the first electrode substrate tabs may be at or proximate to the upper surface portion 110 of the can 100. In addition, the first electrode substrate tabs may be electrically connected to the first electrode current collector plate 300. As an example, the first electrode substrate tabs may be bent in one direction and then coupled to the first electrode current collector plate 300 by welding, which will later be described in detail.

In the second electrode plate 220, a negative electrode active material layer may be formed by coating at least one surface of a copper (Cu) or nickel (Ni) foil. As an example, the negative electrode active material layer may be graphite, carbon, etc. A second electrode uncoated portion in which the negative electrode active material layer is not formed may be provided in the second electrode plate. A plurality of second electrode substrate tabs may be formed by cutting the second electrode uncoated portion into a certain shape by notching, etc. In this embodiment, the second electrode substrate tabs may be at or proximate to the lower side of the can 100. In addition, the second electrode substrate tabs may protrude downward from the separator 230 and may be electrically connected to the second electrode current collector plate 400. Some portions of the second electrode substrate tabs may be electrically connected to the beading part 132 of the can 100. As an example, the second electrode substrate tabs may be bent in one direction and then coupled to the second electrode current collector plate 400 by welding.

The separator 230 may be polyethylene (PE) or polypropylene (PP), but the material of the separator 230 is not limited thereto. The separator 230 may prevent an electrical short between the first electrode plate 210 and the second electrode plate 220 and only allows movement of lithium ions. The separator 230 may have a length sufficient to be in contact with the first electrode current collector plate 400 based on the longitudinal direction of the electrode assembly 200, which will later be described in detail.

The electrode assembly 200 having the above-described structure is electrically connected to the first electrode current collector plate 300 and the second electrode current collector plate 400, and is electrically connected to the terminal portion 500 and the can 100, respectively.

As shown in FIG. 2, the first electrode current collector plate 300 has a circular plate shape and may be made of the same material as the first electrode plate 210. As an example, the first electrode current collector plate 300 may be made of aluminum or an aluminum alloy. The diameter of the first electrode current collector plate 300 may be smaller than the diameter of the can 100. This smaller diameter is configured to prevent the first electrode current collector plate 300 from being electrically connected to the can 100. The first electrode current collector plate 300 may be welded in a configuration in which the lower surface thereof is in contact with the first electrode substrate tab. Accordingly, the first electrode current collector plate 300 and the first electrode plate 210 may be electrically connected. In addition, the upper surface of the first electrode current collector plate 300 may be welded to the rivet terminal 510 of the terminal portion 500, which will be described later. Accordingly, the first electrode current collector plate 300 and the rivet terminal 510 may be electrically connected. Therefore, the first electrode plate 210 and the rivet terminal 510 can be electrically connected by the first electrode current collector plate 300. That is, the first electrode current collector plate 300 becomes a path for current flow between the first electrode plate 210 and the rivet terminal 510.

As shown in FIG. 2, the second electrode current collector plate 400 may include a plate surface portion 410 having a circular plate shape and a contact portion 420 extending from the plate surface portion 410. In one or more embodiments, the contact portion 420 is an edge area of the second electrode current collector plate 400. The upper surface of the plate surface portion 410 may be welded in a configuration in which it is in contact with the second electrode substrate tab. Accordingly, the second electrode current collector plate 400 and the second electrode plate 220 may be electrically connected. To this end, the second electrode current collector plate 400 may be made of the same material as the second electrode plate 220. As an example, the second electrode current collector plate 400 may be made of copper. In this embodiment, the contact portion 420 may extend downward from the edge (e.g., the peripheral edge) of the plate surface portion 410. The contact portion 420 may be in close contact with the inner surface of the beading part 132. To this end, the contact portion 420 may have a curve corresponding to the curve of the beading part 132. As an example, the contact portion 420 may be welded to and electrically connected to the beading part 132. However, the second electrode current collector plate 400 is not electrically connected to the cap assembly.

Additionally, as shown in FIGS. 1 to 4, the terminal portion 500 may include a rivet terminal 510 and a plurality of insulators 520, 530, and 540 for insulating the rivet terminal 510.

The rivet terminal 510 is inserted into a terminal hole 111 formed in the upper surface portion 110 of the can 100. The rivet terminal 510 is electrically connected to the first electrode plate 210 through the first electrode current collector plate 300. The rivet terminal 510 is a terminal coupled to the upper surface portion 110 of the can 100 by a riveting method. The rivet terminal 510 may be inserted into the terminal hole 111 from the outside of the can 100 toward the inside. In one or more embodiments, one end of the rivet terminal 510 is outside the can 100, and the other end of the rivet terminal 510 is inside the can 100. The end of the rivet terminal 510 outside the can 100 has a hollow circular plate shape and is referred to as a head 512. The other end of the rivet terminal 510 is shaped of a hollow cylinder and is referred to as a main body 514. The cylindrical main body 514 is mechanically pressed and deformed into an approximately circular plate shape (the shape of the deformed main body 514 is shown in FIG. 4). In the head 512 and the main body 514 of the rivet terminal 510, a structure for preventing rotation may be provided, which will be described later. When the rivet terminal 510 is coupled to the can 110, the first to third insulators 520 to 540 are inserted between the head 512 and the upper surface portion 110 of the can 100 to insulate the can 100 and the rivet terminal 510 from each other. In a configuration in which the rivet terminal 510 is inserted into the terminal hole 111, the inner end of the rivet terminal 510 is compressed and deformed by a riveting process, such as pressing or spinning. Accordingly, the rivet terminal 510 may be in close contact with the upper surface portion 110 of the can 100.

As an example, the insulator may include a first insulator 520, a second insulator 530, and a third insulator 540. The first insulator 520, the second insulator 530, and the third insulator 540 may be used without limitation in type or kind as long as they are made of an insulating material.

The first insulator 520 is between the outer end (e.g., the head 512) of the rivet terminal 510 and the upper surface portion 110. For example, the first insulator 520 may have a hollow circular plate shape. The diameter of the first insulator 520 may be larger than the diameter of the outer end of the rivet terminal 510.

The second insulator 530 may be shaped to surround the terminal hole 111 formed in the upper surface portion 110. That is, about the terminal hole 111, the second insulator 530 may be shaped to surround the outer and inner surfaces of the upper surface portion 110 and the cross section where the terminal hole 111 is formed.

The third insulator 540 is shaped of a hollow circular plate and is between the inner surface of the upper surface portion 110 and the inner end of the rivet terminal 510.

FIG. 3 shows a terminal structure in a configuration in which the rivet terminal 510 faces the upper side of the secondary battery 10. FIG. 4 shows a terminal structure in a configuration in which the rivet terminal 510 faces the lower side of the secondary battery 10.

Referring to FIGS. 3 and 4, the third insulator 540 is shaped as an approximately circular plate and has a predetermined thickness. The third insulator 540 may include a terminal contact portion 541 that is in contact with the rivet terminal 510, a current collector plate contact portion 543 that is in contact with the first electrode current collector plate 300, and an upper contact portion 545 that is in contact with the upper surface portion 110. The terminal contact portion 541 and the current collector plate contact portion 543 are connected by a first inclined portion 542. The current collector plate contact portion 543 and the upper contact portion 545 are connected by a second inclined portion 544. That is, the terminal contact portion 541, the current collector plate contact portion 543, and the upper contact portion 545 have a step or ramp with respect to each other. The terminal contact portion 541, the first inclined portion 542, the current collector plate contact portion 543, the second inclined portion 544, and the upper contact portion 545 are all integrally formed. A plurality of groove portions 546 are formed on the current collector plate contact portion 543 (see FIG. 4).

The terminal contact portion 541 is a circular area having a diameter larger than the inner end diameter of the rivet terminal 510. A terminal hole into which the rivet terminal 510 is inserted is formed in the center of the terminal contact portion 541. The terminal contact portion 541 is in close contact with the inner surface of the upper surface portion 110 when viewed with reference to the embodiment depicted in FIG. 3. The rivet terminal 510 is coupled in a configuration in which the terminal contact portion 541 is in close contact with the upper surface portion 110. The inner end of the rivet terminal 510 is deformed so that the terminal contact portion 541 can be brought into closer contact with the upper surface portion 110. The first inclined portion 542 is connected to the terminal contact portion 541. The current collector plate contact portion 543 is connected to the edge of the first inclined portion 542.

The current collector plate contact portion 543 is a portion that occupies most of the area of the third insulator 540. The current collector plate contact portion 543 has a circular plate shape, and a terminal contact portion 541 is formed at the center thereof. In the embodiment illustrated in FIG. 3, the current collector plate contact portion 543 is located on the lower side at a certain distance from the upper surface portion 110. The current collector plate contact portion 543 has a step H from the terminal contact portion 541. In addition, as shown in FIG. 4, the groove portions 546 are substantially fan-shaped and may be formed on the current collector plate contact portion 543. The grooves 546 may be formed concavely from the surface in the direction of the first electrode current collector plate 300. The groove portions 546 are provided for reducing the weight of the third insulator 540 and may be omitted in some embodiments. The second inclined portion 544 is connected to the edge of the current collector plate contact portion 543. The upper contact portion 545 is connected to the edge of the second inclined portion 544.

The upper contact portion 545 is an area corresponding to the outer edge of the third insulator 540 when viewed as a whole. In the embodiment illustrated in FIG. 3, the upper contact portion 545 is in contact with the inner surface of the upper surface portion 110. Accordingly, the upper surface of the upper contact portion 545 may be located on the same line (or plane) as the upper surface of the terminal contact portion 541. In addition, the upper contact portion 545 has a smaller width than the terminal contact portion 541 or the current collector plate contact portion 543. In one or more embodiments, the edge of the third insulator 540 may be formed with the second inclined portion 544 but without the upper contact portion 545.

In one or more embodiments, a step (H) between the terminal contact portion 541 and the current collector plate contact portion 543 is a height between the lower surface of the terminal contact portion 541 and the lower surface of the current collector plate contact portion 543, as illustrated in FIG. 3. The step H between the terminal contact portion 541 and the current collector plate contact portion 543 is configured to provide an installation space for the rivet terminal 510. To this end, the step (H) between the terminal contact portion 541 and the current collector plate contact portion 543 is provided. However, if the step (H) between the terminal contact portion 541 and the current collector plate contact portion 543 is too large (i.e., if the current collector plate contact portion 543 is located too far downward), the current collector plate contact portion 543 presses the first electrode current collector plate 300 toward the electrode assembly 200. Then, the electrode assembly 200 may be pressed, resulting in deformation. To prevent this, the step H between the terminal contact portion 541 and the current collector plate contact portion 543 may be set to be equal to or smaller than the protrusion height of the rivet terminal 510. As used herein, the protrusion height of the rivet terminal 510 refers to a thickness measured from the lower surface of the terminal contact portion 541 to the lower end (the lowermost part, regardless of the location) of the rivet terminal 510 on the basis of FIG. 3 (i.e., the thickness of the circular plate in which the main body 514 of the rivet terminal is deformed). Even if the step (H) between the terminal contact portion 541 and the current collector plate contact portion 543 is smaller than the protrusion height of the rivet terminal 510, the step (H) is preferably not more than 0.5 mm. If the step (H) is too large, the rivet terminal 510 may be prevented from contacting the first electrode current collector 300.

One end of the second insulator 530 may be in close contact with the inside of the hollow side of the first insulator 520. The other end of the second insulator 530 may be in close contact with the inside of the hollow side of the third insulator 540. In one or more embodiments, the first to third insulators 520, 530, and 540 may be integrally formed.

On the opposite side of the upper surface portion 110 where the terminal portion 500 having the above-described structure is provided, the cap assembly is provided (i.e., the cap assembly and the terminal portion 500 are on opposite ends of the can 100).

As shown in FIG. 2, the cap assembly may include a cap plate 610 for sealing the can 100 and a gasket 620 for insulating the can 100 and the cap plate 610 from each other.

The cap plate 610 may include a plane portion 612 having a circular plate shape, an inclined surface 614 connected to the plane portion 612, and an extension surface 616 connected to the inclined surface 614 (i.e., the inclined surface 614 connects the plane portion 612 to the extension surface 616). The plane portion 612 may be approximately parallel to the second electrode current collector plate 400. The inclined surface 614 may extend downward and slant outward from the edge of the plane portion 612. The extension surface 616 extends from the edge of the inclined surface 614 and may be parallel (or approximately parallel) to the planar portion 612. The extension surface 616 may be surrounded by the gasket 620 and be between the beading part 132 and the crimping part 134. A notch 612a may be formed on the plane portion 612. The notch 612a may be broken when the pressure inside the secondary battery 10 is higher than a certain pressure. The gas inside the secondary battery 10 may be discharged when the notch 612a is broken. That is, the notch 612a functions as a vent.

The gasket 620 is between the lower portion of the beading part 132 and the crimping part 134 and may cover the extension surface 616 of the cap plate 610. The gasket 620 may cover part or all of the extension surface 616. The side where the gasket 620 and the extension surface 616 are in contact may be defined as the inside, and the side where the gasket 620 is in contact with the beading part 132 may be defined as the outside. In one or more embodiments, a portion of the extension portion 420 of the second electrode current collector plate 400 may be between the outer upper portion of the gasket 620 and the beading part 132. Therefore, the extension portion 420 of the second electrode current collector plate 400 and the extension surface 616 of the cap plate 610 are not brought into contact with each other. That is, the gasket 620 may insulate the cap plate 610 and the can 100 from each other, and may insulate the cap plate 610 and the second electrode current collector plate 400 from each other.

By the above-described configuration, the rivet terminal 510 may have a positive polarity, and the can 100 may have a negative polarity. Accordingly, both the positive rivet terminal 510 of a positive polarity and the negative upper surface portion 110 of a negative polarity may be provided on the upper side of the can 100.

Additionally, the cylindrical secondary battery of the present disclosure may include a structure for preventing the rivet terminal from rotating along the direction of the plate surface of the upper surface portion of the can.

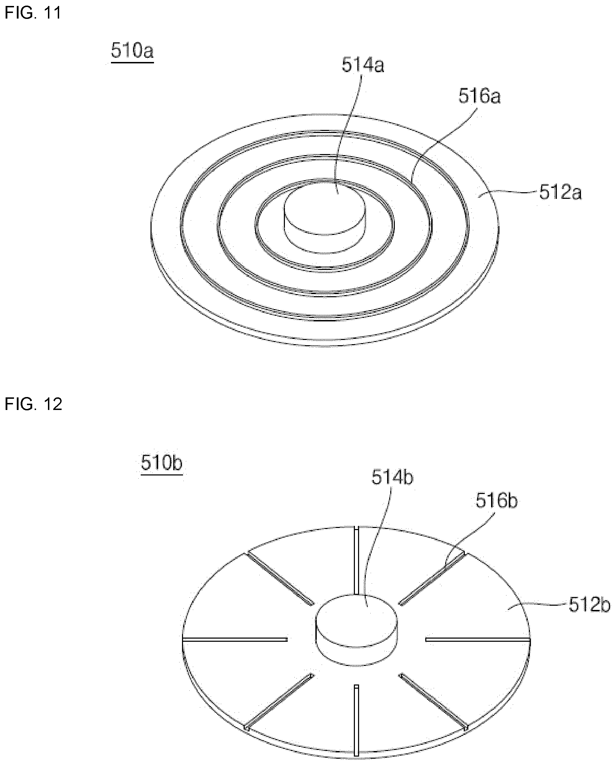

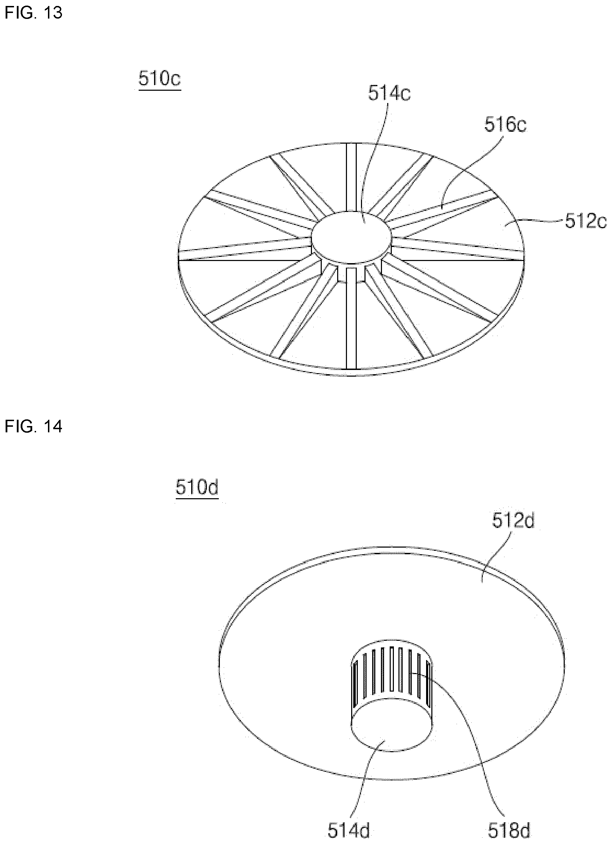

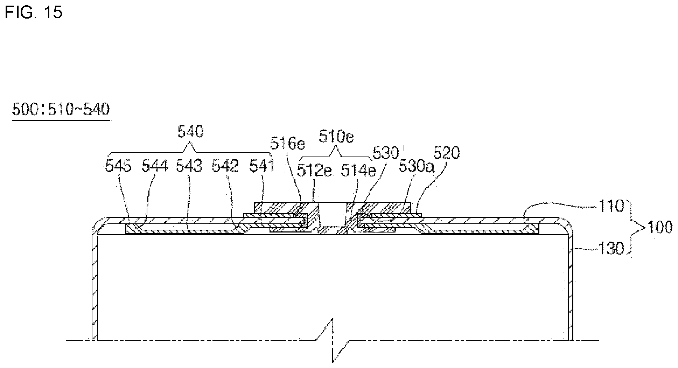

FIGS. 5 to 10 are plan views showing an upper surface of a can according to various embodiments of the present disclosure. FIGS. 11 to 13 are plan views showing a lower surface of a head of a rivet terminal according to various embodiments of the present disclosure. FIG. 14 is a perspective view showing a main body of a rivet terminal according to an embodiment of the present disclosure. FIG. 15 is a partial cross-sectional view showing a terminal structure according to another embodiment of the present disclosure.

As shown in FIGS. 5 to 10, first rotation preventing portions 130a to 130f of various shapes may be provided in the upper surface portions 110a to 110f of the can 100. The first rotation preventing portions 130a to 130f may be formed in the surrounding area of the terminal hole 111. Since the rivet terminal 510 is inserted into the terminal hole 111, when a rotational force acts on the rivet terminal 510, the highest pressure is applied to the surrounding area of the terminal hole 111. Therefore, when the rotation prevention structure is formed adjacent to the terminal hole 111, rotation of the rivet terminal 510 can be effectively prevented. The first rotation preventing portions 130a to 130f may be formed by engraving patterns of various shapes, such as dotted lines, straight lines, curves, and figures (e.g., irregular shapes), by using a laser, etc. In a plan view, the first rotation preventing portions 130a to 130f may appear as simple lines, but when laterally viewed, the first rotation preventing portions 130a to 130f may be grooves that extend to a predetermined depth.

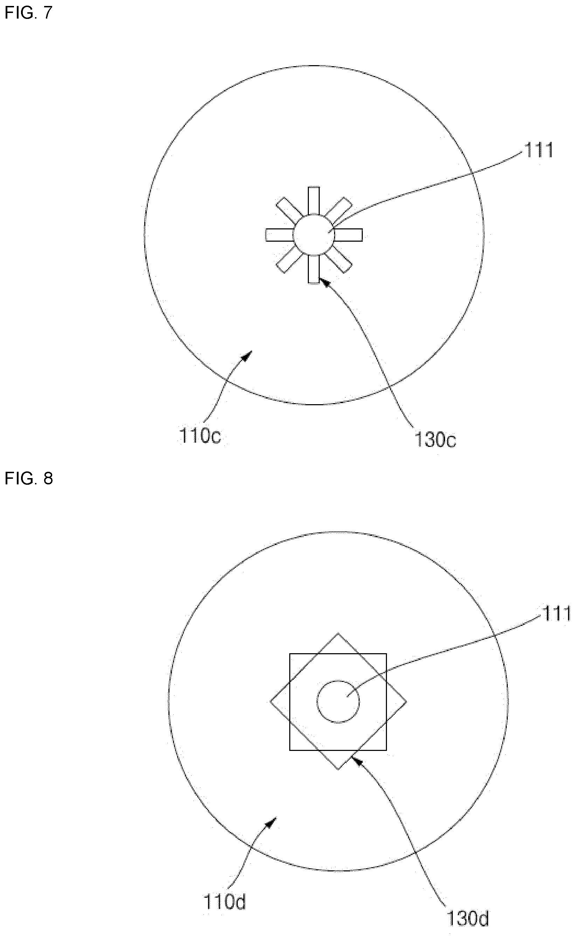

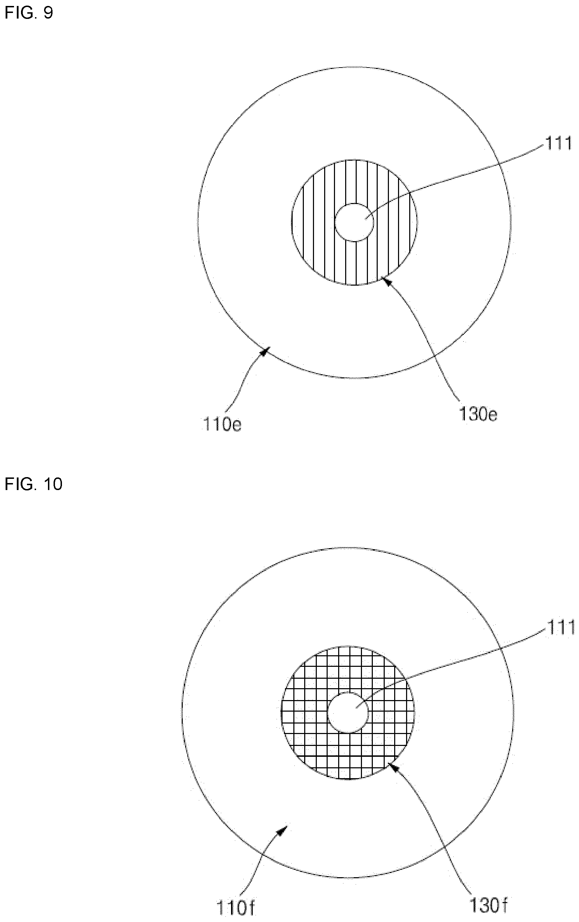

The first rotation preventing portion 130a may have four straight lines arranged around the terminal hole 111 in a cross shape, as shown in FIG. 5. In addition, as shown in FIG. 6, the first rotation preventing portion 130b may have a plurality of straight lines arranged radially around the terminal hole 111. In addition, as shown in FIG. 7, the first rotation preventing portion 130c have a plurality of rectangles arranged radially around the terminal hole 111. In addition, as shown in FIG. 8, the first rotation preventing portion 130d may be arranged so that two or more square patterns overlap around the terminal hole 111 (e.g., two or more square patterns that are rotationally offset from each other). In addition, as shown in FIG. 9, the first rotation preventing portion 130e may have a shape in which a number of straight lines extend parallel or substantially parallel to each other and are encircled by a circle (e.g., a number of parallel straight lines inside a circle). In addition, as shown in FIG. 10, the first rotation preventing portion 130f may have a shape in which a plurality of straight lines are combined into a grid or the like inside a circle (e.g., a plurality of horizontal lines and vertical lines arranged in a grid pattern and encircled in a circle). However, the above-described shapes are provided by way of examples, and various types of patterns other than those described above may be applied to the first rotation preventing portions 130a to 130f.

Due to the first rotation preventing portions 130a to 130f, the friction force between the first insulator 520 and the upper surface portions 110a to 110f may be increased. Accordingly, since the first insulator 520 does not rotate due to an external force, the rivet terminal 510 also does not rotate. In addition, although not shown in the drawings, protrusions corresponding to the shapes of the first rotation preventing portions 130a to 130f may be formed on the first insulator 520. Accordingly, the friction force between the first insulator 520 and the upper surface portions 110a to 110f increases significantly, so that the rotation preventing effect of the rivet terminal 510 can be greatly improved.

Additionally, as shown in FIGS. 11 to 14, second rotation preventing portions 516a to 516c of various shapes are provided on the rivet terminals 510a to 510c rather than the upper surface portion 110 of the can 100. For convenience, the main body of the rivet terminal 510a to 510c is shown in a configuration of being cylindrical before being deformed.

FIGS. 11 to 13 show configurations in which the lower surfaces (surfaces facing the upper surface portion) of the heads 512a to 512c of the rivet terminals 510a to 510c face upward. As shown in FIG. 11, the second rotation preventing portion 516a may have a plurality of circular rings of different sizes protruding from the lower surface of the head 512a (e.g., the second rotation preventing portion 516a may include a plurality of concentric rings protruding from the lower surface of the head 512a). In one or more embodiments, the second rotation preventing portion 516a may be arranged so that the circular rings becomes larger in diameter toward to the side of the main body 514a. In addition, as shown in FIG. 12, the second rotation preventing portion 516b may be a plurality of grooves radially arrange on the lower surface of the head 512b around the main body 514b. In addition, as shown in FIG. 13, the second rotation preventing portion 516c may be in the form of a plurality of ribs connected from the outside of the main body 514c to the lower edge of the head 512c. Here, the second rotation preventing portion 516c may have an inclined shape in which the outer top end of the main body 514c and the lower edge of the head 512c are connected (e.g., the ribs of the second rotation preventing portion 516c may taper from a taller end at the main body 514c to a shorter end at the outer peripheral edge of the head 512b). In addition, in one or more embodiments, the second rotation preventing portion 516c may be in the form of a straight rib connecting the lower edge of the head 512c at the same height from the outside of the main body 514c.

Due to the second rotation preventing portions 516a to 516c, the friction force between the first insulator 520 and the heads 512a to 512c of the rivet terminals 510a to 510c may be increased. Accordingly, since the first insulator 520 does not rotate due to an external force, the rivet terminals 510a to 510c also do not rotate. In addition, in one or more embodiments, protrusions or grooves shaped to correspond to the second rotation preventing portions 516a to 516c may be formed on the first insulator 520. In such an embodiment, the friction force between the first insulator 520 and the heads 512a to 512c of the rivet terminals 510a to 510c increases significantly, so that the rotation preventing effect of the rivet terminals 510a to 510c can be greatly improved.

In addition, as shown in FIG. 14, a third rotation preventing portion 518d may be provided on the outer peripheral surface of the main body 514d of the rivet terminal 510d rather than on the head 512d of the rivet terminal 510d. The third rotation preventing portion 518d may be a plurality of straight grooves concavely formed on the outer peripheral surface of the main body 514d. In one or more embodiments, the third rotation preventing portion 518d may be in the form of a protrusion or rib as well as a groove. In addition, the third rotation preventing portion 518d may also be formed in various patterns. The third rotation preventing portion 518d may be formed by using a laser engraving or serration method.

Due to the third rotation preventing portion 518d, the friction force between the second insulator 530 and the main body 514 of the rivet terminal 510 may be increased. Accordingly, since the second insulator 530 does not rotate due to an external force, the rivet terminal 510 also does not rotate. In addition, in one or more embodiments, a protrusion or groove shaped to correspond to the third rotation preventing portion 518d may be formed on the second insulator 530. In such an embodiment, the friction force between the second insulator 530 and the main body 514 of the rivet terminal 510 is greatly increased, so that the rotation prevention effect of the rivet terminal 510 can be greatly improved.

The above-described first to third rotation preventing portions may be provided alone or as a combination of two or more. In addition, a structure for preventing rotation of the insulator itself may be further included. The structure, which will later be described, may also be provided together with the first to third rotation preventing portions or may be provided alone.

As shown in FIG. 15, the terminal portion 500 may include fourth rotation preventing portions 516e and 530a. The fourth rotation preventing portions 516e and 530a may be provided as protrusions and grooves. A rivet terminal 510e may include the above-described protrusion 516e on the lower side in contact with the upper surface of the second insulator 530. As an example, the protrusion 516e may protrude in a circular shape. In addition, in one or more embodiments, a plurality of protrusions having, for example, straight, hemispherical, oval, or streamlined shapes, may be arranged at regular intervals. A second insulator 530' may include an accommodation groove 530a shaped to correspond to the above-described protrusion 51 0a. The protrusion 516e and the accommodation groove 530a may be engaged with each other to prevent the rivet terminal 51 Oe from rotating along the plate surface direction of the upper surface portion 110 in a configuration in which the rivet terminal 510e is coupled to the upper surface portion 110 of the can 100. In one or more embodiments, the protrusion 516e may be formed on the second insulator 530', and the accommodation groove 530a may be formed on the rivet terminal 510e.

As described above, by including a structure for preventing rotation of the rivet terminal on the upper surface of the can to which the rivet terminal is fastened, or on the rivet head or the main body, the rivet terminal does not rotate due to an external force or vibration. Therefore, the stability and reliability of the secondary battery are improved.

According to an embodiment of the present disclosure, since a structure for preventing rotation of the rivet terminal is provided on the upper surface of the can or the rivet head or the main body to which the rivet terminal is fastened, the rivet terminal may not rotate due to an external force or vibration. Therefore, the stability and reliability of the secondary battery can be improved.

While the foregoing embodiment is only one embodiment for carrying out the present disclosure, which is not limited to the embodiment, it will be understood by a person skilled in the art that various changes in form and details may be made therein without departing from the scope of the present disclosure as defined by the following claims.

Embodiments are set out in the following clauses:
Clause 1. A cylindrical secondary battery comprising: an electrode assembly; a cylindrical can accommodating the electrode assembly; and a terminal portion including a rivet terminal coupled to one side in the longitudinal direction of the can and electrically connected to the electrode assembly and at least one insulator interposed between the can and the rivet terminal to insulate the can and the rivet terminal from each other, wherein a rotation preventing portion may be provided on at least one of the can and the terminal portion.
Clause 2. The cylindrical secondary battery as set out in clause 1, wherein the can includes a circular upper surface through which a terminal hole into which the rivet terminal is inserted is formed, and the rivet terminal includes a head disposed on the outside of the upper surface and a main body inserted into the terminal hole and disposed inside the can.
Clause 3. The cylindrical secondary battery as set out in clause 2, wherein a first rotation preventing portion is formed on the upper surface.
Clause 4. The cylindrical secondary battery as set out in clause 3, wherein the first rotation preventing portion is formed by laser engraving.
Clause 5. The cylindrical secondary battery as set out in clause 4, wherein the first rotation preventing portion is a pattern formed of at least one of a dotted line, a straight line, a curve, and a figure.
Clause 6. The cylindrical secondary battery as set out in clause 5, wherein the rivet terminal includes a second rotation preventing portion formed on the surface of the head facing the upper surface portion.
Clause 7. The cylindrical secondary battery as set out in clause 6, wherein the second rotation preventing portion is at least one of a plurality of grooves, a plurality of protrusions, and a plurality of ribs.
Clause 8. The cylindrical secondary battery as set out in clause 7, wherein the rivet terminal includes a third rotation preventing portion formed on the outer peripheral surface of the main body.
Clause 9. The cylindrical secondary battery as set out in clause 8, wherein the third rotation preventing portion is at least one of a plurality of grooves, a plurality of protrusions, and a plurality of ribs.
Clause 10. The cylindrical secondary battery as set out in clause 9, wherein the first to third rotation preventing portions are provided as a combination of two or more.
Clause 11. The cylindrical secondary battery as set out in clause 1 or 10, wherein at least one protrusion is formed to protrude on one of the insulator and the rivet terminal, and an accommodation groove for accommodating the protrusion is formed on the other one.
Clause 12. A cylindrical secondary battery comprising: an electrode assembly including a first electrode plate, a second electrode plate, and a separator interposed between the first electrode plate and the second electrode plate; a can having a circular upper surface portion through which a terminal hole is formed, and a side portion extending downward from the upper surface, and accommodating the electrode assembly; and a terminal portion including a rivet terminal inserted into the terminal hole and electrically connected to the first electrode plate, and a plurality of insulators insulating between the rivet terminal and the upper surface portion, wherein a rotation preventing portion may be provided on at least one of the can and the terminal portion.
Clause 13. The cylindrical secondary battery as set out in clause 12, wherein the rivet terminal includes a head disposed on the outside of the upper surface portion and a main body inserted into the terminal hole and disposed inside the can.
Clause 14. The cylindrical secondary battery as set out in clause 13, wherein a first rotation preventing portion is formed on the upper surface portion.
Clause 15. The cylindrical secondary battery as set out in clause 14, wherein the first rotation preventing portion is formed by laser engraving.
Clause 16. The cylindrical secondary battery as set out in clause 15, wherein the first rotation preventing portion is a pattern formed of at least one of a dotted line, a straight line, a curve, and a figure.
Clause 17. The cylindrical secondary battery as set out in clause 16, wherein the rivet terminal includes a second rotation preventing portion formed on the surface of the head facing the upper surface portion.
Clause 18. The cylindrical secondary battery as set out in clause 17, wherein the second rotation preventing portion is at least one of a plurality of grooves, a plurality of protrusions, and a plurality of ribs.
Clause 19. The cylindrical secondary battery as set out in clause 18, wherein the rivet terminal includes a third rotation preventing portion formed on the outer peripheral surface of the main body.
Clause 20. The cylindrical secondary battery as set out in clause 19, wherein the third rotation preventing portion is at least one of a plurality of grooves, a plurality of protrusions, and a plurality of ribs.
Clause 21. The cylindrical secondary battery as set out in clause 20, wherein the first to third rotation preventing portions are provided as a combination of two or more.
Clause 22. The cylindrical secondary battery as set out in clause 12 or 21, wherein at least one protrusion is formed to protrude on one of the insulator and the rivet terminal, and an accommodation groove for accommodating the protrusion may be formed on the other one.
Clause 23. The cylindrical secondary battery as set out in clause 22, further comprising: a first electrode current collector plate inserted between the rivet terminal and the electrode assembly and electrically connected to the first electrode plate; and a second electrode current collector plate disposed adjacent to an end of the side portion and electrically connected to the second electrode plate and the side portion.
Clause 24. The cylindrical secondary battery as set out in clause 23, further comprising a cap assembly insulated from the can while being coupled to the side portion.
Clause 25. The cylindrical secondary battery as set out in clause 24, wherein the side portion includes a beading part that is concavely formed in an upper side of the cap assembly, and a crimping part that is formed by inwardly bending a lower end of the side portion, and the cap assembly may be disposed between the beading part and the crimping part.
Clause 26. The cylindrical secondary battery as set out in clause 25, wherein the cap assembly includes a cap plate that seals the side portion, and a gasket inserted between the cap plate and the side portion.
Clause 27. The cylindrical secondary battery as set out in clause 26, wherein the edge of the second electrode current collector plate is inserted between the beading part and the gasket and is in contact with the beading part.

## Claims

1. A secondary battery comprising:
an electrode assembly;
a can accommodating the electrode assembly;
a terminal portion comprising a rivet terminal coupled to one side in a longitudinal direction of the can and electrically connected to the electrode assembly and at least one insulator between the can and the rivet terminal to insulate the can and the rivet terminal from each other; and
a rotation preventing portion on at least one of the can or the terminal portion.

2. The secondary battery as claimed in claim 1, wherein the can comprises a circular upper surface and a terminal hole in the circular upper surface, wherein the rivet terminal is in the terminal hole, and wherein the rivet terminal comprises a head on an outside of the upper surface and a main body in the terminal hole and inside the can.

3. A secondary battery comprising:
an electrode assembly including a first electrode plate, a second electrode plate, and a separator between the first electrode plate and the second electrode plate;
a can accommodating the electrode assembly, the can comprising a circular upper surface portion, a terminal hole in the circular upper surface portion, and a side portion extending downward from the upper surface;
a terminal portion comprising a rivet terminal in the terminal hole and electrically connected to the first electrode plate, and a plurality of insulators insulating between the rivet terminal and the upper surface portion; and
a rotation preventing portion on at least one of the can or the terminal portion.

4. The secondary battery as claimed in claim 3, wherein the rivet terminal comprises a head on an outside of the upper surface portion and a main body in the terminal hole and inside the can.

5. The secondary battery as claimed in claim 3 or claim 4, further comprising:
a first electrode current collector plate between the rivet terminal and the electrode assembly and electrically connected to the first electrode plate; and
a second electrode current collector plate adjacent to an end of the side portion and electrically connected to the second electrode plate and the side portion, and optionally wherein the edge of the second electrode current collector plate is between the beading part and the gasket and is in contact with the beading part.

6. The secondary battery as claimed in any one of claims 3 to 5, further comprising a cap assembly insulated from the can and coupled to the side portion, and optionally wherein the side portion includes a beading part that is concavely in an upper side of the cap assembly, and a crimping part that is formed by inwardly bending a lower end of the side portion, and the cap assembly between the beading part and the crimping part, and optionally wherein the cap assembly includes a cap plate that seals the side portion, and a gasket between the cap plate and the side portion.

7. The secondary battery as claimed in any one of the preceding claims, wherein the rotation preventing portion is a first rotation preventing portion on the upper surface portion.

8. The secondary battery as claimed in claim 7, wherein the first rotation preventing portion is a laser engraving.

9. The secondary battery as claimed in claim 7 or claim 8, wherein the first rotation preventing portion is a pattern formed of at least one of a dotted line, a straight line, a curve, and a figure.

10. The secondary battery as claimed in any one of claims 7 to 9, wherein the rotation preventing portion further comprises a second rotation preventing portion on a surface of the head of the rivet terminal facing the upper surface portion.

11. The secondary battery as claimed in claim 10, wherein the second rotation preventing portion is at least one of a plurality of grooves, a plurality of protrusions, and a plurality of ribs.

12. The secondary battery as claimed in claim 10 or claim 11, wherein the rotation preventing portion further comprises a third rotation preventing portion on the outer peripheral surface of the main body of the rivet terminal.

13. The secondary battery as claimed in claim 12, wherein the third rotation preventing portion is at least one of a plurality of grooves, a plurality of protrusions, and a plurality of ribs.

14. The secondary battery as claimed in any one of the preceding claims, wherein the rotation preventing portion comprises a combination of two or more rotation preventing portions.

15. The secondary battery as claimed in any one of the preceding claims, further comprising at least one protrusion protruding on one of the insulator and the rivet terminal, and an accommodation groove for accommodating the protrusion on the other one of the insulator and the rivet terminal.
